# EUROPÄISCHE PATENTSCHRIFT

(11) **EP 2 362 083 B1**
(45) Veröffentlichungstag und Bekanntmachung des Hinweises auf die Patenterteilung: **13.12.2017**
(21) Anmeldenummer: 11000514.7
(22) Anmeldetag: 22.01.2011
(51) Int. Cl.: F02D 41/00, F02M 26/43

(54) **Verfahren und Vorrichtung zum Betreiben einer Brennkraftmaschine eines Kraftfahrzeuges**
Method and device for operating a combustion engine of a motor vehicle
Procédé et dispositif destinés a commander un moteur à combustion interne d'un véhicule automobile

(30) Priorität: 25.02.2010 DE 102010009287
(43) Veröffentlichungstag der Anmeldung: 31.08.2011
(73) Patentinhaber: MAN Truck & Bus AG, 80995 München (DE)
(72) Erfinder: Pappenheimer, Andreas, 91792 Ellingen (DE)

(56) Entgegenhaltungen:
- EP-A1- 0 811 762
- EP-A1- 2 206 899
- EP-A2- 1 520 969
- WO-A1-01/44640
- WO-A1-03/067066
- DE-A1- 19 731 129
- JP-A- 2000 087 782

## Beschreibung

Die Erfindung betrifft ein Verfahren zum Betreiben einer Brennkraftmaschine insbesondere einer Brennkraftmaschine eines Kraftfahrzeuges, nach dem Oberbegriff des Anspruchs 1. Des Weiteren betrifft die Erfindung eine Vorrichtung zum Betreiben einer Brennkraftmaschine, insbesondere einer Brennkraftmaschine eines Kraftfahrzeuges, nach dem Oberbegriff des Anspruchs 5.

Brennkraftmaschinen mit einer Abgasrückführung sind allgemein bekannt. Die Abgasrückführung, das heißt das Abzweigen eines Abgasteilstroms aus dem Abgastrakt der Brennkraftmaschine und das Zurückführen dieses Abgasteilstroms in den Ansaugtrakt der Brennkraftmaschine dient unter anderem der Reduktion von Stickoxidemissionen. Darüber hinaus kann eine Abgasrückführung auch zu einem Absenken des spezifischen Kraftstoffverbrauchs, zum Beispiel im Teillastbetrieb von Brennkraftmaschinen, eingesetzt werden.

Des Weiteren ist eine Abgasrückführung auch bei aufgeladenen Brennkraftmaschinen bekannt, und zwar im Allgemeinen auf einer Hochdruckseite eines Turboladers. Ein Abgasteilstrom wird dabei in Strömungsrichtung des Abgasstroms vor der Turbine des Turboladers entnommen und dem Ladeluftstrom hinter einem Verdichter des Turboladers wieder zugefügt. Die realisierbaren Luftmassenströme durch eine derartige Abgasrückführung sind wesentlich vom Spüldruckgefälle über die Brennkraftmaschine hinweg abhängig, da der rückgeführte Abgasstrom gegen den Druck der aufgeladenen Ladeluft anarbeiten muss. In Betriebszuständen mit einem geringen Spüldruckgefälle ist somit eine effiziente Abgasrückführung nicht möglich.

Konkret ist aus der DE 10 2006 037 934 A1 eine Brennkraftmaschine mit einer Abgasrückführung bekannt, bei der eine Frischgasanlage zur Versorgung von Brennräumen der Brennkraftmaschine mit Frischgas vorgesehen ist. Weiter umfasst diese Brennkraftmaschine eine Abgasanlage zum Abführen von Abgas aus den Zylindern sowie eine Abgasrückführanlage zum Rückführen von Abgas von der Abgasanlage in die Frischgasanlage. Die Frischgasanlage weist zwei Frischgasleitungen auf, die jeweils zu einer separaten Zylindergruppe der Brennkraftmaschine geführt sind, wobei in jeder der Frischgasleitungen ein als Schaltventil bezeichnetes Absperrelement angeordnet ist, das mittels einer Steuer- und/oder Regeleinrichtung gekoppelt ist, mittels der die Frischgaszufuhr zur Brennkraftmaschine in Abhängigkeit von definierten Brennkraftmaschinenparametern in einem definierten Maße gesteuert oder geregelt freigegeben oder abgesperrt werden kann. Von jeder der Zylindergruppen führt eine Abgasleitung weg, von denen wiederrum Abgasrückführleitungen abzweigen, die zur Frischgasleitung derjenigen Zylindergruppe zurückgeführt werden, von der die Abgasleitung und damit die Abgasrückführleitung abzweigt. Die Steuereinrichtung ist hier so ausgestaltet, dass sie während eines Einlassvorgangs der Zylinder das jeweilige Schaltventil bzw. Absperrelement zum Öffnen des Strömungsquerschnitts ansteuert. Hierdurch kann bis zum Öffnen des Schaltventils stromab der Frischgasanlage bzw. in der jeweiligen Frischgasleitung ein Unterdruck erzielt werden. Denn während des Einlassvorgangs wird das Volumen des jeweiligen Brennraums durch eine entsprechende Kolbenbewegung im zugehörigen Zylinder vergrößert. Die frischgasseitige Druckabsenkung vergrößert die Druckdifferenz zwischen Frischgasseite und Abgasseite, so dass das jeweilige Rückschlagabsperrventil bei der vorgegebenen Druckdifferenz öffnet und eine Rückführung von Abgas ermöglicht. Die frischgasleitungsseitigen Absperrelemente bzw. Schaltventile werden dabei zyklisch angesteuert und damit geöffnet bzw. geschlossen. Mit einer derartigen Anordnung gelingt es grundsätzlich, unabhängiger von einem Spüldruckgefälle gewünschte Abgasrückführungsraten einzustellen. Durch das zyklische Absperren der Ladelauffluten mit paralleler Abgasrückführung verbessert sich zudem auch die Emission der Stickoxide im Vergleich zum permanenten Drosseln.

Brennkraftmaschinen mit einer Abgasrückführung und frischgasseitigen Absperrelementen zeigen darüber hinaus auch die DE 10 2007 009 353 A1, die DE 20 2007 007 117 U1, die DE 10 2007 025 179 A1, die DE 10 2008 046 596 A1 sowie die DE 10 2008 046 594 A1.

WO 03/067066 A1 und EP 1 520 969 A2 lehren eine Brennkraftmaschine mit zwei Zylindergruppen, wobei einer ersten Zylindergruppe Frischluft zugeleitet wird. Das aus der Verbrennung der Frischluft in der ersten Zylindergruppe resultierende Abgas wird anschließend ohne Beimengung weiterer Gase in die Brennkammern der zweiten Zylindergruppe zugeführt und dort nochmals einem Verbrennungsprozess unterzogen.

Demgegenüber ist es Aufgabe der vorliegenden Erfindung, ein Verfahren und eine Vorrichtung zum Betreiben einer Brennkraftmaschine, insbesondere einer Brennkraftmaschine eines Kraftfahrzeuges, zur Verfügung zu stellen, mittels dem bzw. mittels der die Abgasrückführungsrate nochmals erhöht werden kann und/oder die Füllung der Zylinder bzw. Brennräume der Brennkraftmaschine weiter verbessert werden kann.

Diese Aufgabe wird bezüglich des Verfahrens gelöst mit den Merkmalen des Anspruchs 1. Bezüglich der Vorrichtung wird diese Aufgabe gelöst mit den Merkmalen des Anspruchs 5. Vorteilhafte Ausgestaltungen hierzu sind jeweils Gegenstand der darauf rückbezogenen Unteransprüche.

Gemäß den unabhängigen Ansprüchen wird ein Verfahren bzw. eine Vorrichtung zum Betreiben einer Brennkraftmaschine, insbesondere zum Betreiben einer Brennkraftmaschine eines Kraftfahrzeuges, vorgesehen, mit einer mehrflutig ausgebildeten Frischgasanlage zur Versorgung von Zylindern der Brennkraftmaschine mit Frischgas, die mehrere zu unterschiedlichen und jeweils wenigstens einen Zylinder aufweisenden Zylindergruppen geführte Frischgasleitungen aufweist, wobei in jeder der Frischgasleitungen wenigstens ein Absperrelement angeordnet ist, das mit einer Steuer- und/oder Regeleinrichtung gekoppelt ist, mittels der die Frischgaszufuhr zur Brennkraftmaschine in Abhängigkeit von definierten Brennkraftmaschinenbetriebsparametern in einem definierten Maße gesteuert oder geregelt freigebbar oder absperrbar ist. Ferner ist eine mehrflutig ausgebildete Abgasanlage zum Abführen von Abgas aus den Zylindern vorgesehen, die mehrere, insbesondere in der Anzahl der Anzahl der Frischgasleitungen entsprechende Abgasleitungen aufweist, die von den unterschiedlichen Zylindergruppen wegführen. Weiter ist eine mehrflutig, mit mehreren Abgasrückführleitungen ausgebildete Abgasrückführanlage zum Rückführen von Abgas von der Abgasanlage zur Frischgasanlage vorgesehen, wobei von wenigstens einem Teil der Abgasleitungen wenigstens eine Abgasrückführleitung abzweigt und zur Frischgasanlage zurückgeführt ist. Erfindungsgemäß erfolgt eine flutengekreuzte Abgasrückführung, bei der die von den Abgasleitungen einer bestimmten Flut abzweigenden Abgasrückführleitungen jeweils zu Frischgasleitungen einer anderen Flut zurückgeführt sind. Mit einem derartigen Aufbau lässt sich besonders bevorzugt eine Verfahrensführung realisieren, bei der einer mittels eines Absperrelementes von der Frischgaszufuhr abgesperrten Frischgasleitung bzw. -flut mittels einer Abgasrückführleitung Abgas aus einer Abgasleitung einer anderen Flut zugeführt wird, deren zugeordnete Frischgasleitung nicht von der Frischgaszufuhr abgesperrt ist.

Mit einem derartigen erfindungsgemäßen Aufbau bzw. einer derartigen erfindungsgemäßen Verfahrensführung ergibt sich eine gegenüber dem Stand der Technik noch höhere Abgasrückführungsrate, die insbesondere auf dem zeitlichen Zusammentreffen des Absperrens der einen Flut der Frischgasanlage und dem Ankommen einer Abgasrückführungs-Druckwelle der anderen Flut basiert. Dies entspricht einem temporär negativerem Spülgefälle, in dem ein größeres Abgasrückführkonzentrationspaket zu der jeweiligen Zylindergruppe bzw. in das jeweilige Saugrohr gelangt. Daneben verbessert sich zudem mit der erfindungsgemäßen flutengekreuzten Abgasrückführung auch die Füllung der Zylinder, gegenüber einer herkömmlichen parallelen Abgasrückführung.

Die flutengekreuzte Abgasrückführung mit zyklischer Absperrung der Frischgasfluten zeigt zudem im Vergleich zur parallelen Abgasrückführung mit zyklischer Absperrung der Frischgasfluten eine Verbesserung hinsichtlich der Stickoxidemissionen.

Die erfindungsgemäße flutengekreuzte Abgasrückführung kann grundsätzlich mit Aufbauten realisiert werden, die mehr als zwei Fluten aufweisen, zum Beispiel in Verbindung mit einer dreiflutigen Ausgestaltung, bei der zum Beispiel eine, einer ersten Zylindergruppe zugeordnete erste Abgasrückführleitung zu einer, einer zweiten Zylindergruppe zugeordneten Frischgasleitung zurückgeführt ist, während eine, einer zweiten Zylindergruppe zugeordnete Abgasrückführleitung zu einer, einer dritten Zylindergruppe zugeordneten dritten Frischgasleitung zurückgeführt ist sowie eine, einer dritten Zylindergruppe zugeordnete dritte Abgasrückführleitung zu einer, einer ersten Zylindergruppe zugeordneten ersten Frischgasleitung zurückgeführt ist. Dieses Beispiel soll belegen, dass beliebige gekreuzte mehrflutige Anordnungen möglich sind, die auf dem beanspruchten Grundprinzip beruhen. In der Praxis besonders vorteilhaft ist jedoch eine Ausgestaltung der Vorrichtung, bei der die Frischgasanlage, die Abgasanlage und die Abgasrückführanlage jeweils zweiflutig ausgebildet sind, was nachfolgend näher beschrieben wird:

Eine derartige zweiflutige Ausführung sieht vor, dass eine von einer ersten Abgasleitung abzweigende und damit der ersten Zylindergruppe zugeordnete erste Abgasrückführleitung zu einer einer zweiten Zylindergruppe zugeordneten zweiten Frischgasleitung zurückgeführt ist bzw. in diese mündet, und bei der die von der zweiten Abgasleitung abzweigende und damit der zweiten Zylindergruppe zugeordnete zweite Abgasrückführleitung zu der der ersten Zylindergruppe zugeordneten ersten Frischgasleitung zurückgeführt ist bzw. in diese mündet, und zwar jeweils stromab eines in den Frischgasleitungen angeordneten bzw. Absperrelementes. Mit einem derartigen Aufbau lässt sich dann eine Verfahrensführung realisieren, bei der bei geöffnetem Absperrelement in der ersten Frischgasleitung und gleichzeitig im Wesentlichen geschlossenem Absperrelement in der zweiten Frischgasleitung, der zweiten Frischgasleitung mittels der ersten Abgasrückführleitung Abgas zugeführt wird, während im umgekehrten Fall, bei im Wesentlichen geschlossenem Absperrelement in der ersten Frischgasleitung und gleichzeitig geöffnetem Absperrelement in der zweiten Frischgasleitung, der ersten Frischgasleitung mittels der zweiten Abgasrückführleitung Abgas zugeführt wird.

Gemäß einer bevorzugten konkreten Ausgestaltung sind die Frischgasleitungen als Ladeluftleitungen stromab eines Laders eines Abgasturboladers, insbesondere stromab eines Verdichters eines Abgasturboladers, zu der Brennkraftmaschine geführt. Die Abgasleitungen selbst sind bevorzugt zu einer Turbine des Abgasturboladers geführt, wobei die Abgasrückführleitungen stromauf und damit hochdruckseitig von den Abgasleitungen abzweigen. Insbesondere in Verbindung mit einer derartigen Turboladeranordnung ergibt sich eine besonders vorteilhafte und hinsichtlich des Spüldruckgefälles optimierte Abgasrückführung.

Gemäß einer hierzu besonders bevorzugten Ausgestaltung ist vorgesehen, dass stromab des Laders ein Ladeluftkühler angeordnet ist, zu dem ein einziger Ladeluftstrom geführt ist, wobei sich die Ladeluftleitungen stromab des Ladeluftkühlers aufzweigen und zweiflutig zu den beiden Zylindergruppen der Brennkraftmaschine, insbesondere zu einem jeder Zylindergruppe zugeordneten Saugrohrbereich, geführt sind. Mit einer derartigen Aufzweigung nach dem Ladeluftkühler lässt sich der Bauteilaufwand insgesamt vorteilhaft reduzieren.

Es versteht sich von selbst, dass selbstverständlich darüber hinaus auch noch weitere Bauteile vorgesehen sein können, so zum Beispiel eine Kühlung und/oder Drossel- und/oder Absperrelemente im Bereich der Abgasrückführleitungen, um nur ein Beispiel zu nennen.

Für besonders gute Abgasrückführraten hat es sich als zweckmäßig erwiesen, wenn wenigstens ein Teil der Auslassventile derjenigen Zylindergruppe, die nicht vom Frischgas abgesperrt wird, im Wesentlichen zeitgleich oder unmittelbar nach dem Schließen des frischgasleitungsseitigen Absperrelementes der anderen Frischgasleitung öffnet, insbesondere im Bereich zwischen 0 bis 60 Grad Kurbelwinkel nach Schließen des frischgasleitungsseitigen Absperrelementes geöffnet wird. Alternativ und/oder zusätzlich dazu hat es sich als vorteilhaft erwiese, wenn das wenigstens eine Auslassventil derjenigen Zylindergruppe, die nicht vom Frischgas abgesperrt wird, im Wesentlichen zeitgleich oder unmittelbar nach einem definierten Zylinder-Druckwert, insbesondere nach einem Druckmaximum im jeweils zugeordneten Zylinder geöffnet wird.

Die Erfindung wird nachfolgend anhand einer Zeichnung näher erläutert.

Die einzige Figur zeigt schematisch eine Brennkraftmaschine 1, die hier lediglich beispielhaft als Sechs-Zylinder-Reihenbrennkraftmaschine ausgebildet ist. Die mit I, II, III bezeichneten Zylinder dieser Brennkraftmaschine 1 bilden hier eine erste Zylindergruppe 2 aus, während die mit IV, V, VI bezeichneten Zylinder der Brennkraftmaschine 1 eine zweite Zylindergruppe 3 ausbilden.

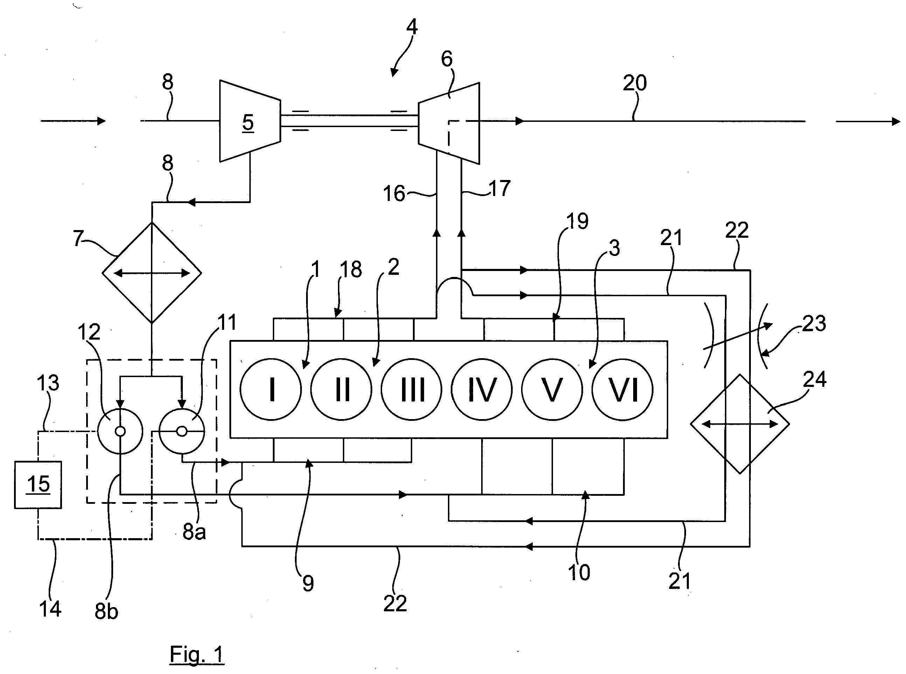

Die in der Fig. 1 gezeigte beispielhafte Anordnung umfasst ferner einen Abgasturbolader 4 mit einem Verdichter 5 und einer Turbine 6. Dem Verdichter 5 ist stromauf der Brennkraftmaschine ein Ladeluftkühler 7 nachgeschaltet, wobei sich eine vom Verdichter 5 über den Ladeluftkühler 7 in Richtung zur Brennkraftmaschine 1 geführte Ladeluftleitung 8 stromab des Ladeluftkühlers 7 in eine erste Ladeluftleitung 8a und eine zweite Ladeluftleitung 8b aufzweigt, die somit zweiflutig zur Brennkraftmaschine 1 geführt sind. Dabei ist die erste Ladeluftleitung 8a über einen Saugrohrbereich 9 mit der ersten Zylindergruppe 2 und die zweite Ladeluftleitung 8b über einen zweiten Saugrohrbereich 10 mit der zweiten Zylindergruppe 3 strömungstechnisch verbunden. In an sich üblicher Weise ist hier jedem Zylinder der Brennkraftmaschine ein Saugrohr zugeordnet, welche Saugrohrbereiche 9, 10 ausbilden, die im vorliegenden Fall als integraler Bestandteil der Ladeluftleitungen 8a und 8b angesehen werden.

Stromauf der Saugrohrbereiche 9, 10 der Ladeluftleitungen 8a, 8b und hier beispielhaft stromab des Ladeluftkühlers 7 ist in jede der beiden Ladeluftleitungen 8a, 8b jeweils ein als Absperrelement fungierendes Schaltventil 11, 12 integriert, die über hier strichpunktiert dargestellte Steuerleitungen 13, 14 mit einer Steuer- und/oder Regeleinrichtung 15 gekoppelt sind, die beispielsweise Bestandteil eines Motorsteuergerätes ist.

Weiter umfasst die hier beispielhaft gezeigte Anordnung jeweils eine Abgasleitung 16, 17 für jede der beiden Zylindergruppen 2, 3. Konkret ist hier die erste Abgasleitung 16 der ersten Zylindergruppe 2 zugeordnet, während die zweite Abgasleitung 17 der zweiten Zylindergruppe 3 zugeordnet ist. Beide Abgasleitungen 16, 17 weisen einen sich in üblicher Weise an die Brennkraftmaschine 1 anschließenden Abgaskrümmer 18, 19 auf, der hier als integraler Bestandteil der beiden, eine zweiflutige Abgasanlage ausbildenden Abgasleitungen 16, 17 angesehen wird. Die beiden Abgasleitungen 16, 17 werden dann zu der Turbine 6 geführt und gegebenenfalls wieder, wie hier gezeigt, zu einer einzigen Abgasleitung 20 vereinigt.

Von den beiden Abgasleitungen 16, 17 zweigt stromauf der Turbine 6 und damit hochdruckseitig sowie weiter bevorzugt stromab der Abgaskrümmer 18, 19 jeweils eine Abgasrückführleitung 21, 22 ab. In jede dieser Abgasrückführleitungen 21, 22 ist hier beispielsweise ein Drossel- und Absperrelement 23 integriert, das hier lediglich äußerst schematisch und beispielhaft dargestellt ist. Ebenfalls können diese beiden Abgasrückführleitungen 21, 22 über einen Abgas-Rückführ-Kühler 24 geführt sein. Selbstverständlich können die Abgasrückführleitungen 21, 22 auch ohne ein derartiges Drossel- und Absperrelement und/oder ohne einen derartigen Abgasrückführ-Kühler 24 ausgebildet sein. Gegebenenfalls könnten, falls sich dies als erforderlich erweisen sollte, auch Flatterventile in die Abgasrückführleitungen integriert sein, was aber hier nicht dargestellt ist.

Die erste Abgasrückführleitung 21 zweigt von der ersten Abgasleitung 16 ab und mündet erfindungsgemäß flutengekreuzt in die zweite Ladeluftleitung 8b ein, und zwar bevorzugt stromab der Schaltventile 11, 12 und stromauf des Saugrohrbereichs 10. In analoger Weise zweigt die zweite Abgasrückführleitung 22 von der zweiten Abgasleitung 17 ab und mündet flutengekreuzt in die erste Ladeluftleitung 8a ein, und zwar ebenfalls wiederum bevorzugt stromauf des Saugrohrbereichs 9 bzw. stromab des zugeordneten Schaltventils 11.

Die beiden Schaltventile 11, 12 werden von der Steuer- und/oder Regeleinrichtung 15 über die Steuerleitungen 13, 14 entsprechend vorgegebener Abgasrückführparameter so angesteuert, dass diese zu bestimmten Betriebszeiten zyklisch, das heißt wechselweise geschlossen und geöffnet werden, wie dies beispielhaft in der Fig. 1 dargestellt ist. Dort ist das Schaltventil 11 geschlossen und das Schaltventil 12 geöffnet, so dass über das Schaltventil 11 und damit die erste Ladeluftleitung 8a kein Frischgas zu den Zylindern I, II, III der ersten Zylindergruppe 2 strömen kann. Durch die Offenstellung des Schaltventils 12 kann dagegen Frischgas über die zweite Ladeluftleitung 8b zu den Zylindern IV, V, VI der zweiten Zylindergruppe 3 strömen. Durch diese Schaltung der Schaltventile 11, 12 wird im Saugrohrbereich 9 der ersten Zylindergruppe 2 ein Unterdruck erzeugt, der dazu führt, dass Abgas über die Abgasrückführleitung 22 von der zweiten Abgasleitung 17 abgezogen und den Zylindern der ersten Zylindergruppe 2 zugeführt wird. Der zweiten Zylindergruppe 3, die mit Frischgas beschickt wird, wird dagegen kein oder nur unwesentlich Abgas über die Abgasrückführleitung 21 zugeführt, so dass es insgesamt bei einer derartigen Betriebsweise zu einer sehr hohen Abgasrückführrate in die erste Zylindergruppe 2 kommt, was einem temporär sehr negativen Spülgefälle entspricht, so dass eine große Menge an Abgas in den Saugrohrbereich 9 und damit weiter in die erste Zylindergruppe eingesaugt wird. Dadurch lässt sich auch die Füllung der Zylinder I, II, III der ersten Zylindergruppe 2 wesentlich gegenüber einer parallel ausgeführten Abgasrückführung verbessern. Ebenso ergibt sich hierdurch eine wesentlich verbesserte NOₓ-Reduktion.

Nach einer definierten Zeitspanne, zum Beispiel 240 Grad Kurbelwinkel bzw. Kurbelwellenumdrehung, werden dann die Schaltventile 11, 12 wiederum von der Steuer- und Regeleinrichtung 15 angesteuert und das Schaltventil 11 geöffnet, während das Schaltventil 12 geschlossen wird. Der Vorgang kehrt sich dann hier entsprechend um und die erste Zylindergruppe 2 wird mit Frischgas bzw. Ladeluft über die erste Ladeluftleitung 8a beschickt, während über die Abgasrückführleitung 21 Abgas aus der ersten Abgasleitung 16 in den Saugrohrbereich 10 vor der zweiten Zylindergruppe 3 zugeführt wird.

## Patentansprüche

1. Verfahren zum Betreiben einer Brennkraftmaschine, insbesondere einer Brennkraftmaschine eines Kraftfahrzeuges, mit einer mehrflutig ausgebildeten Frischgasanlage zur Versorgung von Zylindern der Brennkraftmaschine mit Frischgas, die mehrere zu unterschiedlichen und jeweils wenigstens einen Zylinder aufweisenden Zylindergruppen geführte Frischgasleitungen aufweist, wobei in jeder der Frischgasleitungen wenigstens ein Absperrelement angeordnet ist, das mit einer Steuer- und/oder Regeleinrichtung gekoppelt ist, mittels der die Frischgaszufuhr zur Brennkraftmaschine in Abhängigkeit von definierten Brennkraftmaschinenbetriebsparametern in einem definierten Maße gesteuert oder geregelt freigebbar oder absperrbar ist, mit einer mehrflutig ausgebildeten Abgasanlage zum Abführen von Abgas aus den Zylindern, die mehrere, insbesondere in der Anzahl der Anzahl der Frischgasleitungen entsprechende Abgasleitungen aufweist, die von den unterschiedlichen Zylindergruppen wegführen, und mit einer mehrflutig, mit mehreren Abgasrückführleitungen ausgebildeten Abgasrückführanlage zum Rückführen von Abgas von der Abgasanlage zur Frischgasanlage, wobei von wenigstens einem Teil der Abgasleitungen wenigstens eine Abgasrückführleitung abzweigt und zur Frischgasanlage zurückgeführt ist, **dadurch gekennzeichnet, dass** eine flutengekreuzte Abgasrückführung erfolgt, bei der die von den Abgasleitungen (16, 17) einer bestimmten Flut abzweigenden Abgasrückführleitungen (21, 22) jeweils zu Frischgasleitungen (8a, 8b) einer anderen Flut zurückgeführt sind, wobei die Absperrelemente (11) der einzelnen Frischgasleitungen (8a, 8b) so angesteuert werden, dass einer mittels eines Absperrelementes (11, 12) von der Frischgaszufuhr abgesperrten Frischgasleitung (8a, 8b) mittels einer Abgasrückführleitung (21, 22) Abgas aus einer Abgasleitung (16, 17) einer anderen Flut zugeführt wird, deren zugeordnete Frischgasleitung (8a, 8b) nicht von der Frischgaszufuhr abgesperrt ist.

2. Verfahren nach Anspruch 1, **dadurch gekennzeichnet, dass** eine zweiflutig ausgebildete Frischgasanlage zur Versorgung von Zylindern der Brennkraftmaschine (1) mit Frischgas vorgesehen ist, deren erste Frischgasleitung (8a) zu einer ersten, wenigstens einen Zylinder aufweisenden Zylindergruppe (2) geführt ist und deren zweite Frischgasleitung (8b) zu einer zweiten, wenigstens einen Zylinder aufweisenden Zylindergruppe (3) geführt ist, wobei in jeder der Frischgasleitungen (8a, 8b) wenigstens ein Absperrelement (11, 12) angeordnet ist, das mit einer Steuer- und/oder Regeleinrichtung (15) gekoppelt ist, mittels der die Frischgaszufuhr zur Brennkraftmaschine (1) in Abhängigkeit von definierten Brennkraftmaschinenbetriebsparametern in einem definierten Maße gesteuert oder geregelt freigegeben oder abgesperrt wird, dass eine zweiflutig ausgebildete Abgasanlage zum Abführen von Abgas aus den Zylindern vorgesehen ist, deren erste Abgasleitung (16) von der ersten Zylindergruppe (2) und deren zweite Abgasleitung (17) von der zweiten Zylindergruppe (3) wegführt, dass eine zweiflutig ausgebildete Abgasrückführanlage zum Rückführen von Abgas von der Abgasanlage zur Frischgasanlage vorgesehen ist, deren erste Abgasrückführleitung (21) von der ersten Abgasleitung (16) und deren zweite Abgasrückführleitung (22) von der zweiten Abgasleitung (17) abzweigt, dass eine flutengekreuzte Abgasrückführung erfolgt, bei der die von der ersten Abgasleitung (16) abzweigende und damit der ersten Zylindergruppe (2) zugeordnete erste Abgasrückführleitung (21) in die der zweiten Zylindergruppe (3) zugeordnete zweite Frischgasleitung (8b) mündet, und bei der die von der zweiten Abgasleitung (17) abzweigende und damit der zweiten Zylindergruppe (3) zugeordnete zweite Abgasrückführleitung (22) in die der ersten Zylindergruppe (2) zugeordnete erste Frischgasleitung (8a) mündet, und zwar jeweils stromab eines in den Frischgasieitungen (8a, 8b) angeordneten Absperrelementes (11, 12), dergestalt, dass bei geöffnetem Absperrelement (11) in der ersten Frischgasleitung (8a) und gleichzeitig im Wesentlichen geschlossenem Absperrelement (12) in der zweiten Frischgasleitung (8b), der zweiten Frischgasleitung (8b) mittels der ersten Abgasrückführleitung (21) Abgas zugeführt wird, während im umgekehrten Fall, bei im Wesentlichen geschlossenem Absperrelement (11) in der ersten Frischgasleitung (8a) und gleichzeitig geöffnetem Absperrelement (12) in der zweiten Frischgasleitung (8b), der ersten Frischgasleitung (8a) mittels der zweiten Abgasrückführleitung (22) Abgas zugeführt wird.

3. Verfahren nach Anspruch 1 oder 2, **dadurch gekennzeichnet, dass** wenigstens ein Teil der Auslassventile derjenigen Zylindergruppe, die nicht vom Frischgas abgesperrt wird, im Wesentlichen zeitgleich oder unmittelbar nach dem Schließen des frischgasleitungsseitigen Absperrelementes der anderen Frischgasleitung, insbesondere in einem Bereich zwischen 0 bis 60 Grad Kurbelwinkel nach Schließen des frischgasleitungsseitigen Absperrelementes geöffnet wird.

4. Verfahren nach einem der Ansprüche 1 bis 3, **dadurch gekennzeichnet, dass** das wenigstens eine Auslassventil derjenigen Zylindergruppe, die nicht vom Frischgas abgesperrt wird, im Wesentlichen zeitgleich oder unmittelbar nach einem definierten Druckwert, insbesondere nach einem Druckmaximum, im jeweils zugeordneten Zylinder geöffnet wird.

5. Vorrichtung zum Betreiben einer Brennkraftmaschine, insbesondere einer Brennkraftmaschine eines Kraftfahrzeuges, zur Durchführung eines Verfahrens nach einem der Ansprüche 1 bis 4, mit einer mehrflutig ausgebildeten Frischgasanlage zur Versorgung von Zylindern der Brennkraftmaschine mit Frischgas, die mehrere zu unterschiedlichen und jeweils wenigstens einen Zylinder aufweisenden Zylindergruppen geführte Frischgasleitungen aufweist, wobei in jeder der Frischgasleitungen wenigstens ein Absperrelement angeordnet ist, das mit einer Steuer- und/oder Regeleinrichtung gekoppelt ist, mittels der die Frischgaszufuhr zur Brennkraftmaschine in Abhängigkeit von definierten Brennkraftmaschinenbetriebsparametern in einem definierten Maße gesteuert oder geregelt freigebbar oder absperrbar ist, mit einer mehrflutig ausgebildeten Abgasanlage zum Abführen von Abgas aus den Zylindern, die mehrere, insbesondere in der Anzahl der Anzahl der Frischgasleitungen entsprechende Abgasleitungen aufweist, die von den unterschiedlichen Zylindergruppen wegführen, und mit einer mehrflutig, mit mehreren Abgasrückführleitungen ausgebildeten Abgasrückführanlage zum Rückführen von Abgas von der Abgasanlage zur Frischgasanlage, wobei von wenigstens einem Teil der Abgasleitungen wenigstens eine Abgasrückführleitung abzweigt und zur Frischgasanlage zurückgeführt ist, **dadurch gekennzeichnet, dass** eine flutengekreuzte Abgasrückführung erfolgt, bei der die von den Abgasleitungen (16) einer bestimmten Flut abzweigenden Abgasrückführleitungen (21) jeweils zu Frischgasleitungen einer anderen Flut zurückgeführt sind.

6. Vorrichtung nach Anspruch 5, **dadurch gekennzeichnet, dass** eine zweiflutig ausgebildete Frischgasanlage zur Versorgung von Zylindern der Brennkraftmaschine (1) mit Frischgas vorgesehen ist, deren erste Frischgasleitung (8a) zu einer ersten, wenigstens einen Zylinder aufweisenden Zylindergruppe (2) geführt ist und deren zweite Frischgasleitung (8b) zu einer zweiten, wenigstens einen Zylinder aufweisenden Zylindergruppe (3) geführt ist, wobei in jeder der Frischgasleitungen (8a, 8b) wenigstens ein Absperrelement (11, 12) angeordnet ist, das mit einer Steuer- und/oder Regeleinrichtung (15) gekoppelt ist, mittels der die Frischgaszufuhr zur Brennkraftmaschine (1) in Abhängigkeit von definierten Brennkraftmaschinenbetriebsparametern in einem definierten Maße gesteuert oder geregelt freigebbar oder absperrbar ist, dass eine zweiflutig ausgebildete Abgasanlage zum Abführen von Abgas aus den Zylindern vorgesehen ist, deren erste Abgasleitung (16) von der ersten Zylindergruppe (2) und deren zweite Abgasleitung (17) von der zweiten Zylindergruppe (3) wegführt, dass eine zweiflutig ausgebildete Abgasrückführanlage zum Rückführen von Abgas von der Abgasanlage zur Frischgasanlage vorgesehen ist, deren erste Abgasrückführleitung (21) von der ersten Abgasleitung (16) und deren zweite Abgasrückführleitung (22) von der zweiten Abgasleitung (17) abzweigt, und dass eine flutengekreuzte Abgasrückführung vorgesehen ist, bei der die von der ersten Abgasleitung (16) abzweigende und damit der ersten Zylindergruppe (2) zugeordnete erste Abgasrückführleitung (21) in die der zweiten Zylindergruppe (3) zugeordneten zweite Frischgasleitung (8b) mündet, und bei der die von der zweiten Abgasleitung (17) abzweigende und damit der zweiten Zylindergruppe (3) zugeordnete zweite Abgasrückführleitung (22) in die der ersten Zylindergruppe (2) zugeordnete erste Frischgasleitung (8a) mündet, und zwar jeweils stromab eines in den Frischgasleitungen (8a, 8b) angeordneten Absperrelementes (11, 12).

7. Vorrichtung nach Anspruch 5 oder 6, **dadurch gekennzeichnet, dass** die Frischgasleitungen (8a, 8b) als Ladeluftleitungen stromab eines Laders (5) eines Abgasturboladers (4) zu der Brennkraftmaschine (1) geführt sind, dass die Abgasleitung (16, 17) zu einer Turbine (6) des Abgasturboladers (4) geführt sind, und dass die Abgasrückführleitungen (21, 22) stromauf und damit hochdruckseitig von den Abgasleitungen (16, 17) abzweigen.

8. Vorrichtung nach Anspruch 7, **dadurch gekennzeichnet, dass** stromab des Laders (5) ein Ladeluftkühler (11) angeordnet ist, zu dem ein einziger Ladeluftstrom geführt ist, und dass sich die Ladeluftleitung (8a, 8b) stromab des Ladeluftkühlers (11) aufzweigt und zweiflutig zu den beiden Zylindergruppen (2, 3) der Brennkraftmaschine (1), insbesondere zu einem jeder Zylindergruppe (2, 3) zugeordneten Saugrohrbereich (9, 10), geführt sind.

## Claims

1. Method for operating an internal combustion engine, in particular an internal combustion engine of a motor vehicle, having a multi-channel fresh gas system for the supply of fresh gas to cylinders of the internal combustion engine, which fresh gas system has a plurality of fresh gas lines which lead to different cylinder groups which have in each case at least one cylinder, wherein in each of the fresh gas lines there is arranged at least one shut-off element which is coupled to a control and/or regulating device by means of which the supply of fresh gas to the internal combustion engine can be enabled or shut off to a defined extent in a controlled or regulated manner as a function of defined internal combustion engine operating parameters, having a multi-channel exhaust system for the discharge of exhaust gas out of the cylinders, which exhaust system has a plurality of exhaust lines, in particular corresponding in number to the number of fresh gas lines, which lead away from the different cylinder groups, and having a multi-channel exhaust-gas recirculation system, which is formed with a plurality of exhaust-gas recirculation lines, for recirculating exhaust gas from the exhaust system to the fresh gas system, wherein at least one exhaust-gas recirculation line branches off, and leads back to the fresh gas system, from at least a part of the exhaust lines, **characterized in that** crossed-channel exhaust-gas recirculation takes place, in which the exhaust-gas recirculation lines (21, 22) branching off from the exhaust lines (16, 17) of a certain channel lead back in each case to fresh gas lines (8a, 8b) of a different channel, wherein the shut-off elements (11) of the individual fresh gas lines (8a, 8b) are actuated such that a fresh gas line (8a, 8b) which is shut off from the fresh gas supply by means of a shut-off element (11, 12) is supplied with exhaust gas from an exhaust line (16, 17) of a different channel, whose associated fresh gas line (8a, 8b) is not shut off from the fresh gas supply, via an exhaust-gas recirculation line (21, 22).

2. Method according to Claim 1, **characterized in that** a two-channel fresh gas system is provided for supplying fresh gas to cylinders of the internal combustion engine (1), the first fresh gas line (8a) of which fresh gas system leads to a first cylinder group (2) which has at least one cylinder, and the second fresh gas line (8b) of which fresh gas system leads to a second cylinder group (3) which has at least one cylinder, wherein in each of the fresh gas lines (8a, 8b) there is arranged at least one shut-off element (11, 12) which is coupled to a control and/or regulating device (15) by means of which the supply of fresh gas to the internal combustion engine (1) can be enabled or shut off to a defined extent in a controlled or regulated manner as a function of defined internal combustion engine operating parameters, **in that** a two-channel exhaust system is provided for discharging exhaust gas out of the cylinders, the first exhaust line (16) of which exhaust system leads away from the first cylinder group (2) and the second exhaust line (17) of which exhaust system leads away from the second cylinder group (3), **in that** a two-channel exhaust-gas recirculation system is provided for recirculating exhaust gas from the exhaust system to the fresh gas system, the first exhaust-gas recirculation line (21) of which exhaust-gas recirculation system branches off from the first exhaust line (16) and the second exhaust-gas recirculation line (22) of which exhaust-gas recirculation system branches off from the second exhaust line (17), **in that** crossed-channel exhaust-gas recirculation takes place, in which the first exhaust-gas recirculation line (21) which branches off from the first exhaust line (16) and which is therefore assigned to the first cylinder group (2) opens out into the second fresh gas line (8b) assigned to the second cylinder group (3), and in which the second exhaust-gas recirculation line (22) which branches off from the second exhaust line (17) and which is therefore assigned to the second cylinder group (3) opens out into the first fresh gas line (8a) assigned to the first cylinder group (2), specifically in each case downstream of a shut-off element (11, 12) arranged in the fresh gas lines (8a, 8b), in such a way that, when the shut-off element (11) in the first fresh gas line (8a) is open and at the same time the shut-off element (12) in the second fresh gas line (8b) is substantially closed, exhaust gas is supplied to the second fresh gas line (8b) via the first exhaust-gas recirculation line (21), while in the inverse situation, when the shut-off element (11) in the first fresh gas line (8a) is substantially closed and at the same time the shut-off element (12) in the second fresh gas line (8b) is open, exhaust gas is supplied to the first fresh gas line (8a) via the second exhaust-gas recirculation line (22).

3. Method according to Claim 1 or 2, **characterized in that** at least a part of the outlet valves of that cylinder group which is not shut off from the fresh gas is opened substantially at the same time as or directly after the closing of the fresh-gas-line-mounted shut-off element of the other fresh gas line, in particular in a range between 0 and 60 degrees crank angle after the closing of the fresh-gas-line-mounted shut-off element.

4. Method according to one of Claims 1 to 3, **characterized in that** the at least one outlet valve of that cylinder group which is not shut off from the fresh gas is opened substantially at the same time as or directly after a defined pressure value, in particular a pressure maximum, is reached in the respectively associated cylinder.

5. Device for operating an internal combustion engine, in particular an internal combustion engine of a motor vehicle, for carrying out a method according to one of Claims 1 to 4, having a multi-channel fresh gas system for the supply of fresh gas to cylinders of the internal combustion engine, which fresh gas system has a plurality of fresh gas lines which lead to different cylinder groups which have in each case at least one cylinder, wherein in each of the fresh gas lines there is arranged at least one shut-off element which is coupled to a control and/or regulating device by means of which the supply of fresh gas to the internal combustion engine can be enabled or shut off to a defined extent in a controlled or regulated manner as a function of defined internal combustion engine operating parameters, having a multi-channel exhaust system for the discharge of exhaust gas out of the cylinders, which exhaust system has a plurality of exhaust lines, in particular corresponding in number to the number of fresh gas lines, which lead away from the different cylinder groups, and having a multi-channel exhaust-gas recirculation system, which is formed with a plurality of exhaust-gas recirculation lines, for recirculating exhaust gas from the exhaust system to the fresh gas system, wherein at least one exhaust-gas recirculation line branches off, and leads back to the fresh gas system, from at least a part of the exhaust lines, **characterized in that** crossed-channel exhaust-gas recirculation takes place, in which the exhaust-gas recirculation lines (21) which are branched off from the exhaust lines (16) of a certain channel lead back in each case to fresh gas lines of a different channel.

6. Device according to Claim 5, **characterized in that** a two-channel fresh gas system is provided for supplying fresh gas to cylinders of the internal combustion engine (1), the first fresh gas line (8a) of which fresh gas system leads to a first cylinder group (2) which has at least one cylinder, and the second fresh gas line (8b) of which fresh gas system leads to a second cylinder group (3) which has at least one cylinder, wherein in each of the fresh gas lines (8a, 8b) there is arranged at least one shut-off element (11, 12) which is coupled to a control and/or regulating device (15) by means of which the supply of fresh gas to the internal combustion engine (1) can be enabled or shut off to a defined extent in a controlled or regulated manner as a function of defined internal combustion engine operating parameters, **in that** a two-channel exhaust system is provided for discharging exhaust gas out of the cylinders, the first exhaust line (16) of which exhaust system leads away from the first cylinder group (2) and the second exhaust line (17) of which exhaust system leads away from the second cylinder group (3), **in that** a two-channel exhaust-gas recirculation system is provided for recirculating exhaust gas from the exhaust system to the fresh gas system, the first exhaust-gas recirculation line (21) of which exhaust-gas recirculation system branches off from the first exhaust line (16) and the second exhaust-gas recirculation line (22) of which exhaust-gas recirculation system branches off from the second exhaust line (17), and **in that** crossed-channel exhaust-gas recirculation is provided, in which the first exhaust-gas recirculation line (21) which branches off from the first exhaust line (16) and which is therefore assigned to the first cylinder group (2) opens out into the second fresh gas line (8b) assigned to the second cylinder group (3), and in which the second exhaust-gas recirculation line (22) which branches off from the second exhaust line (17) and which is therefore assigned to the second cylinder group (3) opens out into the first fresh gas line (8a) assigned to the first cylinder group (2), specifically in each case downstream of a shut-off element (11, 12) arranged in the fresh gas lines (8a, 8b).

7. Device according to Claim 5 or 6, **characterized in that** the fresh gas lines (8a, 8b) lead to the internal combustion engine (1), as charge air lines, downstream of a charger (5) of an exhaust-gas turbocharger (4), **in that** the exhaust lines (16, 17) lead to a turbine (6) of the exhaust-gas turbocharger (4), and **in that** the exhaust-gas recirculation lines (21, 22) branch off from the exhaust lines (16, 17) upstream, and therefore at the high pressure side.

8. Device according to Claim 7, **characterized in that** a charge-air cooler (11) is arranged downstream of the charger (5), to which charge-air cooler is conducted a single charge air flow, and **in that** the charge air line (8a, 8b) branches off downstream of the charge-air cooler (11) and leads in two-channel form to the two cylinder groups (2, 3) of the internal combustion engine (1), in particular to an intake pipe region (9, 10) assigned to each cylinder group (2, 3).

## Revendications

1. Procédé pour faire fonctionner un moteur à combustion interne, en particulier un moteur à combustion interne d'un véhicule automobile, comprenant une installation de gaz frais réalisée avec plusieurs flux pour l'alimentation en gaz frais de cylindres du moteur à combustion interne, laquelle installation présente plusieurs conduites de gaz frais conduisant vers des groupes de cylindres différents présentant à chaque fois au moins un cylindre, au moins un élément d'arrêt étant disposé dans chacune des conduites de gaz frais, lequel est accouplé à un dispositif de commande et/ou de régulation, au moyen duquel l'alimentation en gaz frais au moteur à combustion interne peut être libérée ou bloquée dans une mesure définie de manière commandée ou régulée en fonction de paramètres de fonctionnement définis du moteur à combustion interne, comprenant une installation de gaz d'échappement réalisée avec plusieurs flux pour l'évacuation de gaz d'échappement hors des cylindres, laquelle installation présente plusieurs conduites de gaz d'échappement dont notamment le nombre correspond au nombre des conduites de gaz frais, conduites de gaz d'échappement qui partent des différents groupes de cylindres et comprenant une installation de recirculation de gaz d'échappement avec plusieurs flux, réalisée avec plusieurs conduites de recirculation de gaz d'échappement, pour la recirculation de gaz d'échappement depuis l'installation de gaz d'échappement vers l'installation de gaz frais, au moins une conduite de recirculation de gaz d'échappement partant d'au moins une partie des conduites de gaz d'échappement et étant reconduite vers l'installation de gaz frais, **caractérisé en ce qu'**une recirculation de gaz d'échappement à flux croisés se produit, dans laquelle les conduites de recirculation de gaz d'échappement (21, 22) partant des conduites de gaz d'échappement (16, 17) d'un flux particulier sont reconduites à chaque fois vers des conduites de gaz frais (8a, 8b) d'un autre flux, les éléments d'arrêt (11) des conduites de gaz frais individuelles (8a, 8b) étant commandés de telle sorte que du gaz d'échappement provenant d'une conduite de gaz d'échappement (16, 17) d'un autre flux, dont la conduite de gaz frais associée (8a, 8b) n'est pas bloquée vis-à-vis de l'alimentation en gaz frais, soit acheminé au moyen d'une conduite de recirculation de gaz d'échappement (21, 22) à une conduite de gaz frais (8a, 8b) bloquée au moyen d'un élément d'arrêt (11, 12) vis-à-vis de l'alimentation en gaz frais.

2. Procédé selon la revendication 1, **caractérisé en ce qu'**une installation de gaz frais réalisée avec deux flux est prévue pour l'alimentation en gaz frais de cylindres du moteur à combustion interne (1), dont la première conduite de gaz frais (8a) est guidée vers un premier groupe de cylindres (2) présentant au moins un cylindre et dont la deuxième conduite de gaz frais (8b) est guidée vers un deuxième groupe de cylindres (3) présentant au moins un cylindre, au moins un élément d'arrêt (11, 12) étant disposé dans chacune des conduites de gaz frais (8a, 8b), lequel est accouplé à un dispositif de commande et/ou de régulation (15) au moyen duquel l'alimentation en gaz frais au moteur à combustion interne (1) est libérée ou bloquée dans une mesure définie de manière commandée ou régulée en fonction de paramètres de fonctionnement définis du moteur à combustion interne, **en ce qu'**une installation de gaz d'échappement réalisée avec deux flux est prévue pour l'évacuation de gaz d'échappement hors des cylindres, dont la première conduite de gaz d'échappement (16) part du premier groupe de cylindres (2) et dont la deuxième conduite de gaz d'échappement (17) part du deuxième groupe de cylindres (3), **en ce qu'**une installation de recirculation de gaz d'échappement réalisée avec deux flux est prévue pour faire circuler le gaz d'échappement de l'installation de gaz d'échappement vers l'installation de gaz frais, dont la première conduite de recirculation de gaz d'échappement (21) part de la première conduite de gaz d'échappement (16) et dont la deuxième conduite de recirculation de gaz d'échappement (22) part de la deuxième conduite de gaz d'échappement (17), **en ce qu'**une recirculation de gaz d'échappement à flux croisés se produit, dans laquelle la première conduite de recirculation de gaz d'échappement (21) partant de la première conduite de gaz d'échappement (16), et par conséquent associée au premier groupe de cylindres (2), débouche dans la deuxième conduite de gaz frais (8b) associée au deuxième groupe de cylindres (3) et dans laquelle la deuxième conduite de recirculation de gaz d'échappement (22) partant de la deuxième conduite de gaz d'échappement (17), et par conséquent associée au deuxième groupe de cylindres (3), débouche dans la première conduite de gaz frais (8a) associée au premier groupe de cylindres (2), et ce à chaque fois en aval d'un élément d'arrêt (11, 12) disposé dans les conduites de gaz frais (8a, 8b), de telle sorte que lorsque l'élément d'arrêt (11) dans la première conduite de gaz frais (8a) est ouvert, et que simultanément l'élément d'arrêt (12) dans la deuxième conduite de gaz frais (8b) est sensiblement fermé, du gaz d'échappement soit acheminé à la deuxième conduite de gaz frais (8b) au moyen de la première conduite de recirculation de gaz d'échappement (21), tandis que dans le cas contraire, lorsque l'élément d'arrêt (11) dans la première conduite de gaz frais (8a) est sensiblement fermé et que l'élément d'arrêt (12) dans la deuxième conduite de gaz frais (8b) est simultanément ouvert, du gaz d'échappement soit acheminé à la première conduite de gaz frais (8a) au moyen de la deuxième conduite de recirculation de gaz d'échappement (22).

3. Procédé selon la revendication 1 ou 2, **caractérisé en ce qu'**au moins une partie des soupapes de sortie du groupe de cylindres qui n'est pas bloqué vis-à-vis du gaz frais sont ouvertes sensiblement en même temps que, ou immédiatement après, la fermeture de l'élément d'arrêt côté conduite de gaz frais de l'autre conduite de gaz frais, en particulier dans une plage d'angle de vilebrequin comprise entre 0 et 60 degrés après la fermeture de l'élément d'arrêt côté conduite de gaz frais.

4. Procédé selon l'une quelconque des revendications 1 à 3, **caractérisé en ce que** l'au moins une soupape de sortie du groupe de cylindres qui n'est pas bloqué vis-à-vis du gaz frais est ouverte sensiblement en même temps que, ou immédiatement après, une valeur de pression définie, en particulier après un maximum de pression, dans le cylindre respectivement associé.

5. Dispositif pour faire fonctionner un moteur à combustion interne, en particulier un moteur à combustion interne d'un véhicule automobile, pour mettre en oeuvre un procédé selon l'une quelconque des revendications 1 à 4, comprenant une installation de gaz frais réalisée avec plusieurs flux pour l'alimentation en gaz frais de cylindres du moteur à combustion interne, laquelle installation présente plusieurs conduites de gaz frais conduisant vers des groupes de cylindres différents présentant à chaque fois au moins un cylindre, au moins un élément d'arrêt étant disposé dans chacune des conduites de gaz frais, lequel est accouplé à un dispositif de commande et/ou de régulation, au moyen duquel l'alimentation en gaz frais au moteur à combustion interne peut être libérée ou bloquée dans une mesure définie de manière commandée ou régulée en fonction de paramètres de fonctionnement définis du moteur à combustion interne, comprenant une installation de gaz d'échappement réalisée avec plusieurs flux pour l'évacuation de gaz d'échappement hors des cylindres, laquelle installation présente plusieurs conduites de gaz d'échappement dont notamment le nombre correspond au nombre des conduites de gaz frais, qui partent des différents groupes de cylindres et comprenant une installation de recirculation de gaz d'échappement avec plusieurs flux, réalisée avec plusieurs conduites de recirculation de gaz d'échappement, pour la recirculation de gaz d'échappement depuis l'installation de gaz d'échappement vers l'installation de gaz frais, au moins une conduite de recirculation de gaz d'échappement partant d'au moins une partie des conduites de gaz d'échappement et étant reconduite vers l'installation de gaz frais, **caractérisé en ce qu'**une recirculation de gaz d'échappement à flux croisés se produit, dans laquelle les conduites de recirculation de gaz d'échappement (21) partant des conduites de gaz d'échappement (16) d'un flux particulier sont reconduites à chaque fois vers des conduites de gaz frais d'un autre flux.

6. Dispositif selon la revendication 5, **caractérisé en ce qu'**une installation de gaz frais réalisée avec deux flux est prévue pour l'alimentation en gaz frais de cylindres du moteur à combustion interne (1), dont la première conduite de gaz frais (8a) est guidée vers un premier groupe de cylindres (2) présentant au moins un cylindre et dont la deuxième conduite de gaz frais (8b) est guidée vers un deuxième groupe de cylindres (3) présentant au moins un cylindre, au moins un élément d'arrêt (11, 12) étant disposé dans chacune des conduites de gaz frais (8a, 8b), lequel est accouplé à un dispositif de commande et/ou de régulation (15) au moyen duquel l'alimentation en gaz frais au moteur à combustion interne (1) est libérée ou bloquée dans une mesure définie de manière commandée ou régulée en fonction de paramètres de fonctionnement définis du moteur à combustion interne, **en ce qu'**une installation de gaz d'échappement réalisée avec deux flux est prévue pour l'évacuation de gaz d'échappement hors des cylindres, dont la première conduite de gaz d'échappement (16) part du premier groupe de cylindres (2) et dont la deuxième conduite de gaz d'échappement (17) part du deuxième groupe de cylindres (3), **en ce qu'**une installation de recirculation de gaz d'échappement réalisée avec deux flux est prévue pour faire recirculer le gaz d'échappement de l'installation de gaz d'échappement vers l'installation de gaz frais, dont la première conduite de recirculation de gaz d'échappement (21) part de la première conduite de gaz d'échappement (16) et dont la deuxième conduite de recirculation de gaz d'échappement (22) part de la deuxième conduite de gaz d'échappement (17), et **en ce qu'**une recirculation de gaz d'échappement à flux croisés est prévue, dans laquelle la première conduite de recirculation de gaz d'échappement (21) partant de la première conduite de gaz d'échappement (16), et par conséquent associée au premier groupe de cylindres (2), débouche dans la deuxième conduite de gaz frais (8b) associée au deuxième groupe de cylindres (3) et dans laquelle la deuxième conduite de recirculation de gaz d'échappement (22) partant de la deuxième conduite de gaz d'échappement (17), et par conséquent associée au deuxième groupe de cylindres (3), débouche dans la première conduite de gaz frais (8a) associée au premier groupe de cylindres (2), et ce à chaque fois en aval d'un élément d'arrêt (11, 12) disposé dans les conduites de gaz frais (8a, 8b).

7. Dispositif selon la revendication 5 ou 6, **caractérisé en ce que** les conduites de gaz frais (8a, 8b) sont guidées sous forme de conduites d'air de suralimentation en aval d'un compresseur (5) d'un turbocompresseur à gaz d'échappement (4) vers le moteur à combustion interne (1), **en ce que** la conduite de gaz d'échappement (16, 17) sont guidées vers une turbine (6) du turbocompresseur à gaz d'échappement (4), et **en ce que** les conduites de recirculation de gaz d'échappement (21, 22) partent en amont, et par conséquent du côté haute pression, des conduites de gaz d'échappement (16, 17).

8. Dispositif selon la revendication 7, **caractérisé en ce qu'**en aval du compresseur (5) est disposé un refroidisseur d'air de suralimentation (11) vers lequel est guidé un flux d'air de suralimentation unique, et **en ce que** la conduite d'air de suralimentation (8a, 8b) se ramifie en aval du refroidisseur d'air de suralimentation (11) et est guidée sous forme de deux flux vers les deux groupes de cylindres (2, 3) du moteur à combustion interne (1), en particulier vers une région de tube d'aspiration (9, 10) associée à chaque cylindre (2, 3).
